(19) Europäisches Patentamt
European Patent Office
Office européen des brevets

(11) Publication number: **0 158 893**
**A1**

(12) # EUROPEAN PATENT APPLICATION

(21) Application number: 85103747.3

(22) Date of filing: 28.03.85

(51) Int. Cl.[4]: C 08 G 18/12
C 08 G 18/28, C 08 G 18/40
C 08 G 18/65, C 09 D 5/08

(30) Priority: 29.03.84 US 594713

(43) Date of publication of application:
23.10.85 Bulletin 85/43

(84) Designated Contracting States:
AT BE CH DE FR GB IT LI LU NL SE

(71) Applicant: UNION CARBIDE CORPORATION
Old Ridgebury Road
Danbury Connecticut 06817(US)

(72) Inventor: Chow, Sui-Wu
4 Conventry Square
Bridgewater (08807) New Jersey(US)

(72) Inventor: Smith, Donald Foss, Jr.
988 Buxton Road
Bridgewater (08807) New Jersey(US)

(72) Inventor: Kopf, Peter William
R.D. 1, 27 Walker Drive
Belle Mead (08502) New Jersey(US)

(74) Representative: Weinhold, Peter, Dr. et al,
Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8
D-8000 München 40(DE)

(54) **Silane containing isocyanate prepolymers.**

(57) Isocyanate containing prepolymers partially end-capped with organo-functional silanes have been prepared which contain diols, polyols and diisocyanates. These prepolymers are useful as precursors of urethane polymers and can be made as moisture curable one component urethane or two package urethanes.

EP 0 158 893 A1

# SILANE CONTAINING ISOCYANATE PREPOLYMERS

## BACKGROUND OF THE INVENTION

This invention pertains to the preparation of silane containing isocyanate prepolymers and more particularly to their use as precursors of polyurethanes having enhanced solvent and moisture resistance as well as improved wet adhesion.

## BACKGROUND ART

Commercial applications of silanes as coupling agents, adhesion promoters and sealants are known to those in the art. Room temperature vulcanizable sealants based on moisture cure of silane end-capped--polyetherurethanes are also known. Improved adhesion of coating compositions to metallic surfaces offers the added advantage of improving corrosion resistance.

Silanes and silane-modified polymers have important commercial applications in several areas, viz., as coupling agents in composite preparation as demonstrated by E. P. Pludemann, Appl. Polymer. Symposia, 19, 75 (1972); as moisture cure wire and cable jacketing resins (U.S. 4,343,917 and U.S. 4,328,323); as adhesion promoters (U.S. 4,181,687); and as sealants (U.S. 3,632,575 and U.S. 3,678,010). Silicones and silicone copolymers (silicone-alkyd and silicone polyesters) are also used as coatings, such as, release coatings, coil coatings and maintenance or marine finishes. Room temperature vulcanizable sealants based on moisture cure of silane end-capped-polyether urethanes are described in U.S. 4,374,237. These sealant

prepolymers were prepared by the reaction of isocyanate-terminated urethane oligomers with gamma-aminopropyltrimethoxysilane.

Polyurethanes are reaction products of polyols and polyisocyanates and are useful in many applications including foams, adhesives, sealants and coatings. However, isocyanates are toxic substances and to minimize this hazard of toxicity, the monomeric isocyanates are converted to the less volatile prepolymers either by oligomerization or by reaction with a polyol. In order to be competitive with existing polyurethanes, it is imperative that these prepolymers afford polyurethanes with as good or better mechanical and physical properties than those of the existing properties.

It is, therefore, an objective of this invention to prepare new isocyanate prepolymers which afford coatings with good wet adhesion, moisture resistance and superior corrosion protection.

It is another objective of this invention to provide isocyanate prepolymers which are easily cured by the conventional methods.

Other objectives will become apparent to those skilled in the art upon a reading of the specification.

## DISCLOSURE OF THE INVENTION

These objects are satisfied by silane-containing isocyanate prepolymers which are curable compositions comprising isocyanate terminated reaction products of organic polyols, diols and diisocyanates which have been partially

end-capped with an organofunctional silane which contains groups reactive with an isocyanate and which can be represented by the general formula:

$$\text{I} \qquad Q\text{-}R'\text{-}\overset{R''_a}{\overset{|}{Si}}\text{-}(OR''')_{3-a}$$

In formula I, Q is a monovalent radical that contains an isocyanate reactive moiety, such as mercapto, ureido, amino groups. Thus Q can be:

-SH in a mercapto functional silane

$-\underset{R}{\underset{|}{N}}-CO-NHR$ in a ureido functional silane and

-NH-R in an amino functional silane wherein R can be H, alkyl, aryl, aralkyl, alkaryl and

$$-R'\text{-}\overset{R''_a}{\overset{|}{Si}}\text{-}(OR''')_{3-a}$$

wherein:

R'' and R''' are lower alkyl groups containing from 1 to about 4 carbon atoms;

R' is an alkylene radical containing from 2 to about 18 carbon atoms;

a is an integer having values of 0, 1 or 2;

Said polyols are organic polymers having an average hydroxyl functionality $\leq 6$; and said diols are alkylene glycols or glycol ethers and lactone diols.

Examples of mercapto-silanes are: γ-mercaptopropyltrimethoxysilane, and γ-mercaptopropyltriethoxylsilane available from

Union Carbide Corporation as A189 and A1891 respectively.

An example of a ureidosilane is γ-ureidopropyltriethoxylsilane available from Union Carbide Corporation as A1160.

Aminosilanes useful in this invention include:
γ-aminopropyltrimethoxysilane,
γ-aminopropyltriethoxysilane,
N-β-(aminoethyl)-γ-aminopropyltrimethoxylsilane,
N-methyl-γ-aminopropyltrimethoxysilane, and
N-phenyl-γ-aminopropyltriethoxysilane.

The preferred aminosilanes are those containing only secondary aminofunctionalities. If R in the group Q is alkyl or contains an alkyl moiety, this alkyl group has preferably 1 to 6 carbon atoms. In case R stands for aryl or contains an aryl moiety it is preferably a phenyl group. The preferred amino silanes can be represented by the general formula I wherein Q=-NHR. R- can be alkyl, aryl, aralkyl or alkaryl groups.

The most preferred amino silanes are N,N-bis(trialkoxysilylalkyl)amines, such as:
N,N-bis(trimethoxysilylpropyl)amine,
N,N-bis(triethoxysilylpropyl)amine,
N,N-bis(tripropoxylsilylpropyl)amines, and the like. These bis-silanes introduce greater amounts of silane for each isocyanate group reacted and therefore provide an efficient way of incorporating silane into the prepolymers of this invention. They have about 1 to 4 carbons in the trialkoxy and alkyl moieties.

The preparation of suitable silanes is described in U.S. 2,832,754, U.S. 2,930,809 and U.S. 4,209,455 which are incorporated herein by reference.

Any available organic diioscyanate can be used in this invention including toluene diisocyanate, isophorone diisocyante, meta-phenylene

diisocyanate, para-phenylene diisocyante, bis-(p-isocyanatophenyl)methane, 2,4'-diphenylmethane diisocyanate, benzidine diisocyanate, decamethylene diisocyanate, and the like. Other suitable isocyanates for use in this invention are presented in U.S. 3,632,557 column 2, lines 41-59; U.S. 3,627,922 column 2, line 71 to column 3 line 11, and U.S. 3,711,445 column 2 lines 3-60.

The preferred organic polymers used as the polyol invention include vinyl resins, such as, vinyl chloride/vinyl acetate/ vinyl alcohol terpolymers; vinyl chloride/vinyl acetate/hydroxy alkyl acrylates and hydroxyalkyl methacrylates; styrene/ branched alkylacrylates/straight chain alkyl acrylates/hydroxyl containing acrylic monomers and the like.

Particularly preferred organic polyols include: vinyl chloride/vinyl acetate/hydroxypropyl acrylate terpolymers containing 81% vinyl chloride, 4% vinyl acetate and 15% hydroxy propyl acrylate having number average molecular weights ranging from about 500 to about 35,000, methyl methacrylate/butyl acrylate/hydroxethyl acrylate terpolymers, styrene/t-butyl acrylate/ n-butyl acrylate/epsilon-caprolactone modified hydroxyethyl acrylate copolymers, and the like.

Suitable diols include alkylene glycols, and alkylene ether glycols such as, ethylene glycol, 1,2-propylene glycol, 1,3-propylene glycol, 1,4-butylene glycol, diethylene glycol, triethylene glycol, dipropylene glycol, and the like.

Other suitable diols which may be used in the practice of this invention include polylactone

diols that are commercially available and that are fully described, for example, in U.S. 3,169,945. Polylactone polyols are also disclosed in U.S. 3,169,945 which is incorporated herein by reference. As described in the patent the polylactone diols and polyols are produced by the catalytic polymerization of an excess of lactone and an organic polyfunctional initiator having as least two reactive hydrogen atoms. The organic functional initiators can be any polyhydroxyl compound as is shown in U.S. Pat. No. 3,169,945. Illustrative thereof are the diols such as ethylene glycol, diethylene glycol, triethylene glycol, 1,2-propylene glycol, dipropylene glycol, 1,3-propylene glycol, polyethylene glycols, polypropylene glycols, neopentyl glycol, 1,4-butanediol, poly(oxyethylene-oxypropylene) glycols, and similar polyalkylene glycols, either blocked, capped or heteric, containing up to about 40 or more alkyleneoxy units in the molecule, 3-methyl-1-5-pentanediol, cyclohexanediol, 4,4'-methylene-bis-cyclohexanol, 4,4'-isopropylidene-bis-cyclohexanol, xylenediol, 2-(4-hydroxymethylphenyl) ethanol, 1,6-hexanediol and the like; triols such as glycerol, trimethylolpropane, 1,2,6-hexanetriol, and the like; tetrols such as erythritol, pentaerythritol, dipentaerythritol, sorbitol, and the like.

When the organic functional initiator is reacted with a caprolactone, a reaction occurs that can be represented in its simplest form by the equation:

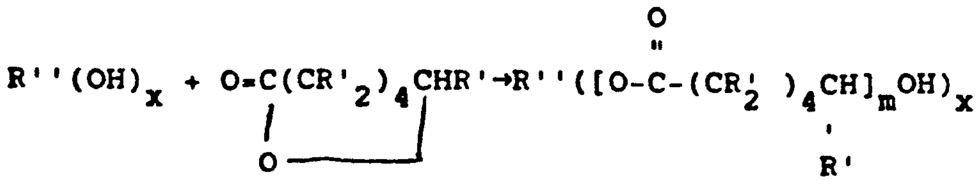

In this equation the organic functional initiator is the $R''(OH)_x$ compound (wherein R" is alkylene having up to about 8 carbons) and the caprolactone is the

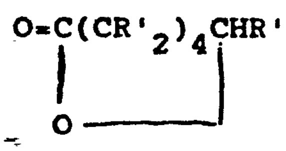

compound; this can be epsilon caprolactone itself or a substituted caprolactone wherein R' is an alkyl, alkoxy, aryl, cycloalkyl, alkaryl or aralkyl group having up to twelve carbon atoms and wherein at least six of the R' groups are hydrogen atoms, as shown in U.S. 3,169,945. The polycaprolactone polyols that are used are shown by the formula on the right hand side of the equation; they can have an average molecular weight of from 200 to about 6,000. The preferred polycaprolactone polyol compounds are those having an average molecular weight of from about 290 to about 6,000, most preferably from about 290 to 3,000. The most preferred polycaprolactone diol compounds are those having an average molecular weight of from about 290 to about 1,500 and the most preferred polycaprolactone triol and tetrol compounds are those having an average molecular weight of from

about 290 to about 3,000; these are most preferred because of their low viscosity properties. In the formula m is an integer representing the average number of repeating units needed to produce the compound having said molecular weights. In the formula x is an integer having an average value of from about 2 to 8, preferably 2 to 4. The hydroxyl number of the polycaprolactone polyol can be from about 15 to 600, preferably from 200 to 500; and the polycaprolactone can have an average of from 2 to 8, preferably 2 to 4, hydroxyl groups.

Illustrative of polycaprolactone polyols that can be used in preparing the adduct compositions of this invention, one can mention the reaction products of a polyhydroxyl compound having an average from 2 to 8 hydroxyl groups with caprolactone. The manner in which these type polycaprolactone polyols are produced is shown in U.S. Pat. No. 3,169,945 and many such compositions are commercially available. In the following table there are listed illustrative polycaprolactone polyols. The first column lists the organic functional initiator that is reacted with the caprolactone and the average molecular weight of the polycaprolactone polyol is shown in the second column. Knowing the molecular weights of the initiator and of the polycaprolactone polyol one can readily determine the average number of molecules of caprolactone (Tone Units) that reacted to produce the compounds; this figure is shown in the third column.

POLYCAPROLACTONE POLYOLS

| Initiator | Average MW of polyol | Average No. of Tone units in molecules |
|---|---|---|
| 1 Ethylene glycol | 290 | 2 |
| 2 Ethylene glycol | 803 | 6.5 |
| 3 Ethylene glycol | 2,114 | 18 |
| 4 Propylene glycol | 874 | 7 |
| 5 Octylene glycol | 602 | 4 |
| 6 Decalene glycol | 801 | 5.5 |
| 7 Diethylene glycol | 527 | 3.7 |
| 8 Diethylene glycol | 847 | 6.5 |
| 9 Diethylene glycol | 1,246 | 10 |
| 10 Diethylene glycol | 1,998 | 16.6 |
| 11 Diethylene glycol | 3,526 | 30 |
| 12 Triethylene glycol | 754 | 5.3 |
| 13 Polyethylene glycol(MW 200)* | 713 | 4.5 |
| 14 Polyethylene glycol(MW 600)* | 1,398 | 7 |
| 15 Polyethylene glycol(MW 1500)* | 2,868 | 12 |
| 16 1,2-Propylene glycol | 646 | 5 |
| 17 1,3-Propylene glycol | 988 | 8 |
| 18 Dipropylene glycol | 476 | 3 |
| 19 Polypropylene glycol(MW 425)* | 835 | 3.6 |
| 20 Polypropylene glycol(MW 1000)* | 1,684 | 6 |
| 21 Polypropylene glycol(MW2000)* | 2,456 | 4 |
| 22 Hexylene glycol | 916 | 7 |
| 23 2-Ethyl-1,3-hexanediol | 602 | 4 |
| 24 1,5-Pentanediol | 446 | 3 |
| 25 1,4-Cyclohexanediol | 629 | 4.5 |
| 26 1,3-Bis(hydroxyethyl)-benzene | 736 | 5 |
| 27 Glycerol | 548 | 4 |
| 28 1,2,6-Hexanetriol | 476 | 3 |
| 29 Trimethylolpropane | 590 | 4 |
| 30 Trimethylolpropane | 750 | 5.4 |
| 31 Trimethylolpropane | 1,103 | 8.5 |
| 32 Triethanolamine | 890 | 6.5 |
| 33 Erythritol | 920 | 7 |
| 34 Pentaerythritol | 1,219 | 9.5 |
| 35 1,4-Butanediol | 546 | 4 |
| 36 Neopentyl Glycol | 674 | 5 |

*Average molecular weight of glycol.

The structures of the compounds in the above tabulation are obvious to one skilled in the art based on the information given. The structure of compound No. 7 is:

$$HO[(CH_2)_5\overset{\overset{O}{\|}}{C}O]_rCH_2CH_2OCH_2CH_2[O\overset{\overset{O}{\|}}{C}(CH_2)_5]_qOH$$

wherein the variables r and q are integers, the sum of r + q has an average value of 3.7 and the average molecular weight is 527. The structure of compound No. 20 is:

$$HO[(CH_2)_5\overset{\overset{O}{\|}}{C}O]_r(C_3H_6O)_nC_3H_6[O\overset{\overset{O}{\|}}{C}(CH_2)_5]_qOH$$

wherein the sum of r + q has an average value of 6 and the average molecular weight is 1,684. This explanation makes explicit the structural formulas of compounds 1 to 34 set forth above.

Although epsilon-caprolactone is the preferred lactone for the preparation of both diols and polyols, it is appreciated that other lactones can be used in this invention. Illustrative of other lactones are beta-propiolactone, delta-valerolactone, zeta-enantholactone and the like including derivatives thereof, such as, gamma-methyl-delta-valerolactone, and the like. Also useful in this invention are polyester polyols and diols which can be prepared by esterification of a polyfunctional carboxylic acid with a polyfunctional alcohol. Polyether polyols and diols can be used also and these can be obtained by ring opening polymerization of alkylene oxides.

## DETAILED DESCRIPTION OF THE INVENTION

The curable compositions of this invention may be prepared in two steps:

In the first step a polyol, a diol and excess of at least one diisocyanate are allowed to interact to afford an isocyanate terminated prepolymer as shown in the equations below.

$R_x(OH)_x$ + $R_2(OH)_2$ + $D(NCO)_2$ →
POLYOL DIOL DIISOCYANATE

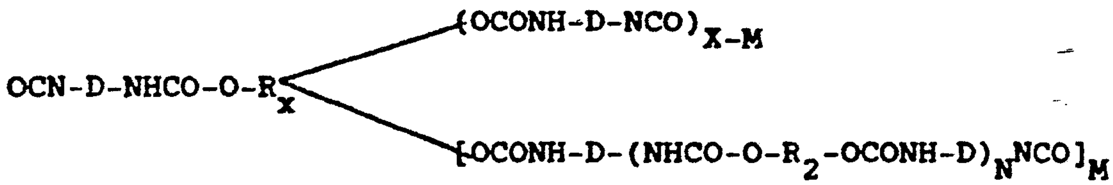

These prepolymers can be used as precursors for moisture curable one component urethanes or as the isocyanate in 2-package urethanes. They can also be used as intermediates for the preparation of radiation curable urethanes. Their polyol functionality permits highly cross-linked urethanes to be prepared which possess improved solvent and moisture resistance. However, when these isocyanate terminated prepolymers are silane end capped and moisture cured as shown in the equations below

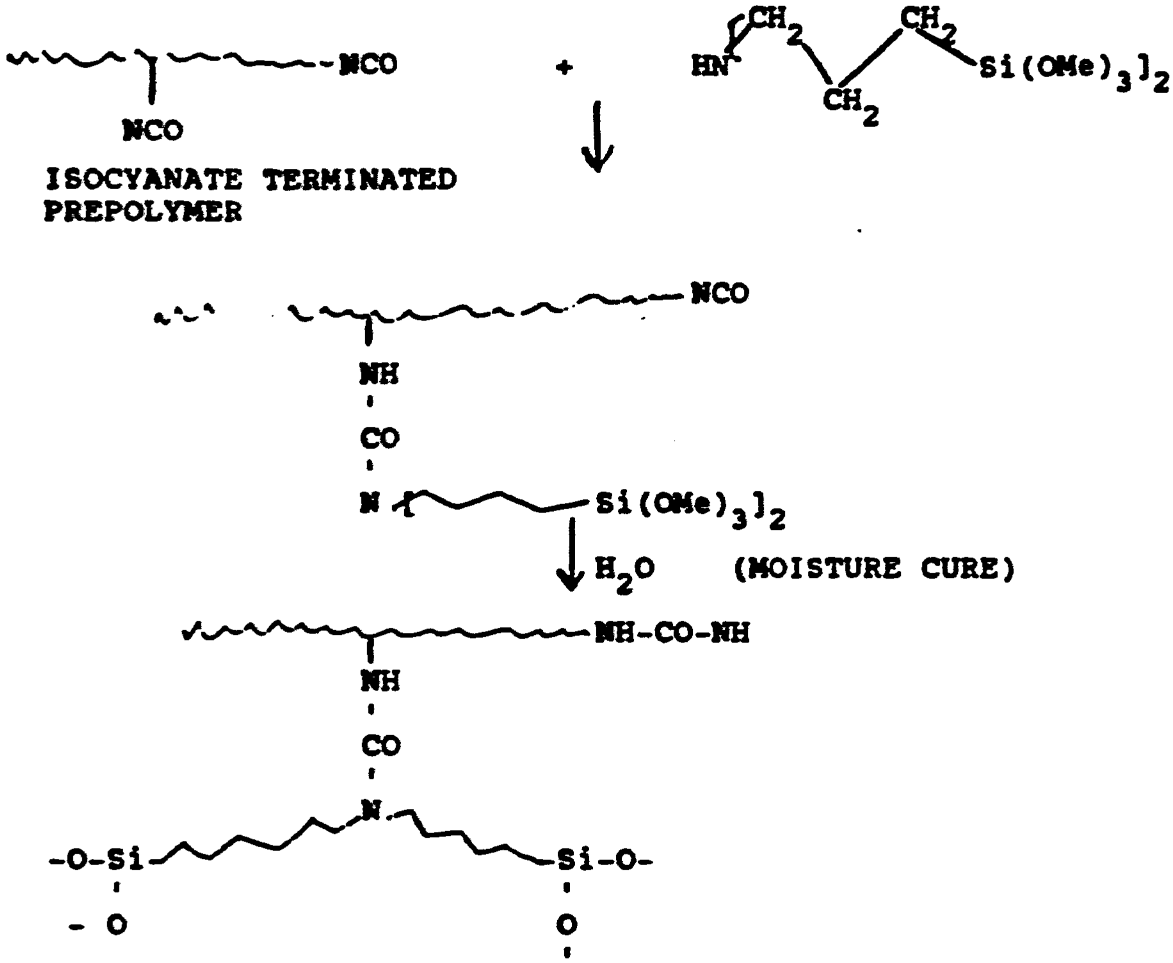


The resultant polyurethanes exhibit improved wet adhesion, moisture resistance and corrosion protection for substrates on which they are coated. Since the curable compositions of this invention are only partially end-capped with aminosilanes they contain both the alkoxy silane and isocyanate groups. Both groups are reactive with water or hydroxyl containing compounds. Therefore, these silane containing isocyanate polymers are useful intermediates for urethanes preparations by either two component systems or via a moisture curable one component system.

These silane modified isocyanate prepolymers can also be used for the preparation of urethanes by reaction with polyols, such as, trimethylolpropane, hexanediol, and the like, via two component systems. Further optimization of properties can be obtained through the selection of the polyol components.

Reaction of the isocyanate functionality of these prepolymers with compounds containing a photochemically polymerizable groups, such as, hydroxyethyl acrylate or methacrylate, yield a series of radiation curable polymers.

Catalysts for the cure of the curable compositions of this invention are known to those skilled in the art. The preferred moisture cure catalysts are bis(2-dimethylaminoethyl) ether commercially available as NIAX Catalyst A99, triethylenediamine (sold under the trade designation Dabco) and di-butyltin dilaurate.

The following tests, terms and materials are used in the description of this invention.

Cellosolve acetate - $CH_3CH_2OCH_2CH_2OCOCH_3$

Polyol I - Normally solid terpolymer of vinyl chloride, vinyl acetate and hydroxypropyl acrylate having a number average molecular weight of about 2000 containing 2.62 percent hydroxyl by weight of which about 25% is primary.

Polyol II - Partially hydrolyzed vinyl chloride/vinyl acetate copolymer containing about 2 weight percent of hydroxyl functionality and a number average molecular weight of about 8000.

Polyol III - Normally solid terpolymer of methyl methacrylate, (butyl acrylate and hydroxyethyl acrylate (57.7 : 30.7 : 11.6 wt. percent respectively).

Polyol IV - Normally solid copolymer containing styrene, t-butyl acrylate, n-butyl acrylate and an acrylic monomer having the formula

$$CH_2 = CH-\overset{\overset{O}{\|}}{C}-O-CH_2-CH_2-O-[\overset{\overset{O}{\|}}{C}-(CH_2)_5-O]_2-H$$

in a wt. percent respectively of 14 : 20 : 28 : 38.

Polyol V - A reaction product of trimethylol propane and E-caprolactone having a number average molecular weight of about 900 and an hydroxyl number of 187

Diol I - Butanediol

Diol II - A polycaprolactone diol having a number average molecular weight of 530, an average hydroxyl number of 212 and commercially available from Union Carbide Corporation as TONE-0200.

Diol III - A polycaprolactone diol having a number average molecular weight of 830, an average hydroxyl number of 135 and commercially available from Union Carbide as TONE-0210.

Diol IV - Polycaprolactone diol having a number average molecular weight of 2000, an average hydroxyl number of 56 commercially available from Union Carbide Corporation as TONE-0240.

Silane I - N,N-bis(3-trimethoxysilylpropyl)amine

Hydroxyl number - mg. of KOH per gram of sample or

$$OH = \frac{56.1 \times 1000 \times f}{M.W.}$$

where

OH = hydroxyl number of a diol or polyol

f = average functionality or average number of hydroxyl groups per molecule of polyol or diol

M.W. = average molecular weight of polyol or diol.

DABCO - Triethylenediamine

NIAX® Catalyst A99 - Bis-(2-dimethylaminoethyl) ether available from Union Carbide Corporation.

T-12 - Di-butyltindilaurate

Glass Transition Temperature (Tg) - Also called the second order phase transition temperature refers to the minimum temperatures found by following resilience (recovery from 1% elongation) of a film, varying in thickness from 3-15 mils, against temperature of A Brown, "Textile Research Journal, 25, 891 (1955).

No Tack Time - Time required for the film to become sufficiently cured such that under moderate pressure, one's finger no longer detects a soft and tacky condition.

Sward Hardness - Measured with a Sward Rocker as described in "Paint Testing Manual" 1972 13th ed. p. 286 section 5.1.3.4.

(MEK) Methylethyl ketone Rubs - The MEK double rub involves saturating a gauze cloth or a cotton swab with MEK and rubbing the saturated cloth back and forth over the dried film until the metal surface is observable. This test has been described in U.S. 4,243,767.

Desmodur N - Oligomerized hexamethylene diisocyanate with an average degree of Polymer of about 3. Available from Mobay.

TDI - Toluene diisocyanate.

Gardner Impact - (ASTM-D2794-69) impact resistances were measured with a Gardner Heavy Duty Impact Tester using a 4 lb weight.

VMCA - Bakelite® vinyl chloride resin containing 81% vinyl chloride, 17% vinyl acetate and 2% by weight maleic acid copolymerized therein.

DIDP - Di-isodecyl phthalate

IPDI - Isophorone diisocyanate.

The invention is further described in the examples which follow. All parts and percentages are by weight unless otherwise specified.

## GENERAL PREPARATION OF MOISTURE CURE URETHANE PREPOLYMERS

The procedure is illustrated by the preparation of a polymer containing Polyol I, Diol I and toluene diisocyanate. A solution of Polyol I in CELLOSOLVE acetate was dehydrated by azeotropic

distillation with toluene before reaction with the isocyanate.

The dehydrated solution (694 g) containing 150.9 g (0.23 equivalent) of Polyol I, 245.9 g (0.593 equivalent) of Diol I, 0.56 g stannous octoate was added to 143.2 g (1.645 equivalents) of toluene diisocyanate in 96 g CELLOSOLVE acetate at a rate sufficient to maintain the reaction temperature at 35°C or less over about four to five hours. The reaction was protected from moisture with a nitrogen sparge. When the reaction solution reached constant viscosity, which required about twenty-four hours, the isocyanate content was determined by treatment with dibutylamine and back titation of the excess amine with standard hydrochloric acid. The resulting product had an isocyanate content of 1.0 meg/g of solution and Brookfield viscosity 1500 cps (25°C) and a total solid content of 59%.

Examples 1 - 11

Following the general procedure described above for the General Preparation of Moisture Cure Urethane Polymers, a series of moisture curable, one-component urethane prepolymers was prepared from various polyols, diols and diisocyanates. The components, proportions and results are contained in Table I.

**TABLE I**

**MOISTURE CURE URETHANE PREPOLYMERS**

| Example | Polyol | wt. % | Diol | wt. % | Isocyanate | wt. % | OH NCO | Solvent | % Solids | Brookfield Viscosity | NCO Conc. m eq/g Soln. |
|---|---|---|---|---|---|---|---|---|---|---|---|
| 1 | I | 28 | III | 46 | TDI | 26 | 0.51 | CELL. Acet.[1] | 60 | 1600 | 1.0 |
| 2 | " | 26.7 | " | 45.1 | " | 28.2 | 0.46 | " | 56 | 1000 | 0.97 |
| 3 | " | 25.2 | " | 48 | " | 26.8 | 0.5 | MAK[2] | 60 | 700 | 0.92 |
| 4 | " | 36 | II | 30 | " | 34 | 0.43 | CELL. Acet. | 61 | 3450 | 1.4 |
| 5 | " | 24 | III | 45 | IPDI | 31 | 0.5 | MAK | 60 | 1500 | 0.88 |
| 6 | " | 18.4 | " | 43.1 | MDI | 38.5 | 0.43 | " | 60 | 1250 | 1.1 |
| 7 | II | 25.6 | " | 48.7 | TDI | 25.7 | 0.5 | " | 50 | 400 | 0.8 |
| 8 | I | 28.9 | Diol I | 5.2 | TDI | 33.3 | 0.5 | " | 60 | 2650 | 1.2 |
| 9 | IV | 43.5 | II | 30.1 | TDI | 26.4 | 0.5 | CELL. Acet. | 60 | 600 | 1.0 |
| 10 | III | 40.2 | II | 31.9 | " | 27.9 | 0.5 | " | 60 | 900 | 0.97 |
| 11 | V | 21 | II | 50 | " | 29 | 0.78 | " | 77 | -- | 0.52 |

[1] CELLOSOLVE acetate.

[2] Methyl amyl ketone.

## Catalysts

Suitable catalysts for moisture cure of the prepolymers of this invention include bis alkylamino ethers, such as, bis-(2-dimethylamino-ethyl)ether, alkyl amines, such as, triethylenediamine and alkyl metal monobasic acids, such as, di-butyltin dilaurate, and the like. Films cast on glass plates from solutions of isocyanate terminated prepolymer urethanes containing these catalysts were allowed to stand at ambient conditions to cure. Their cure was followed by no tack time, Sward Hardness and MEK rubs. The data obtained are summarized in Tables II and III. From these studies NIAX Catalyst A99 appeared to be the most effective. For the acrylic compositions at 0.2 wt. % level, no tack was observed in about two to four hours. At a 0.4 wt. % level sufficient cross linking was to yield 100 MEK rubs was obtained in about two hours. When the solvent resistance of these films attained 100 MEK rubs without development of tack, the films were sufficiently strong to be removed from the glass plates.

**TABLE II**

**CATALYSIS OF MOISTURE CURE ACRYLIC URETHANE**

| | | | Polyol IV/Diol II/TONE 0200/TDI | | | |
|---|---|---|---|---|---|---|
| Example | Catalyst | Conc. | No Tack Time | 100 MEK Rub Time | Sward Hardness at 100 Rubs | Sward Hardness 1 Day |
| Control A | None | -- | 1-2 Days | 2 Days | 12 | -- |
| 12 | A-99 | 0.2 | 2 Hrs. | 4 Hrs. | 8 | 8 |
| | | 0.4 | 1 Hr. | 2 Hrs. | 10 | 10 |
| 13 | T-12 | 0.2 | 6-24 Hrs. | 1 Day | 6 | 6 |
| 14 | DABCO | 0.2 | 6 Hrs. | 1 Day | 12 | 12 |
| | | 0.4 | 2.5 Hrs. | 6 Hrs. | 10 | 10 |
| 15 | DABCO/T-12 | 0.1/0.1 | 6-14 Hrs. | 1 Day | 12 | 12 |

## TABLE III

### CATALYSIS OF MOISTURE CURE VINYL URETHANE

| Example | Catalyst | Conc. Wt. % | Polyol I/Diol III/TDI: No Tack Time | 100 MEK Rub Time | Sward Hardness at 100 MEK Rub | Sward Hardness 1 Day |
|---|---|---|---|---|---|---|
| Control B | None | -- | 7-24 Hrs. | 2 Days | 14 | 4 |
| 16 | A-99 | 0.2 | 3.5 Hrs. | 1 Day | 12 | 12 |
| | | 0.4 | 2.5 Hrs. | 4 Hrs. | 4 | 12 |
| 17 | T-12 | 0.2 | 7-24 Hrs. | 1 Day | 6 | 6 |
| 18 | DABCO | 0.2 | 7-14 Hrs. | 2 Days | 14 | 4 |
| 19 | DABCO/T-12 | 1/0.1 | 7-24 Hrs. | 1 Day | 6 | 6 |
| 20 | DABCO/A99 | 0.2/0.1 | 7-24 Hrs. | 1 Day | 6 | 6 |

Mechanical Properties

In determining mechanical properties of films prepared as above, cure was allowed to proceed at ambient temperature until their infrared spectra showed no isocyanate remained, i.e., no infrared absorption at 2250 $cm^{-1}$. Separation of the cured films from glass plates was accomplished by immersion in water. Mechanical strengths of the cured films were then measured. The data obtained are summarized in Table IV.

The use of these highly functionalized oligomeric acrylic and vinyl polyols (average functionality $\geq$ 5) allows the preparation of highly crosslinked compositions at comparable or reduced levels of diisocyanate. Furthermore, these polyols, I-IV, possess hydrophobic backbones to improve hydrolytic resistance of the ester based compositions.

Optimization is possible through the selection of diols of different chain lengths. For example, the use of lower molecular weight diols, Diol II vs. Diol III resulted in higher Polyol I concentration in the prepolymer. The resulting cured composition possessed higher modulus (100,000 psi) but at the expense of elongation (76%) cf. (Example 24 in Table IV). Polymers with high modulus without significant reduction in extensibility or tensile strength were obtained using a combination of short- and long-chain diols.

The composition based on Polyol I, butane diol, Diol IV and TDI had a modulus of 129,000 psi, tensile strength of 5,900 psi and an elongation of

136% (Table IV, Example 26). It should be further noted that clear film of this composition has a Sward Hardness value of 50-60, which substantially higher than the Polyol III/Diol III based polymers (Sward Hardness 20).

The modulus-temperature relationship was also obtained for Polyol I/Diol III/TDI and compared with Polyol I/Desmodur N (NCO/OH N 1.1). The data shown that Polyol I/Desmodur N has a higher room temperature modulus. However, the glass transition temperature of both polyurethanes are in the room temperature region and the moduli varied widely with temperature in the 20-30°C range, the 40-120°C range their moduli do not differ greatly. Due to higher cross-linking density, the Polyol I/Desmodur N composition retains its modulus at 120-170°C, while the one component polyurethane looses rigidity rapidly above 150°C.

TABLE IV

MECHANICAL PROPERTIES OF MOISTURE CURED URETHANES (CLEAR)

| Example | Prepolymer Composition | (Wt. %) | Modulus (psi) | Tensile Strength (psi) | Elongation (%) |
|---|---|---|---|---|---|
| 21 | Polyol I/Diol III/TDI | (24/49/27) | 14,100 | 7,690 | 182 |
| 22 | " "/IPDI | (23.5/44.7/31.8) | 3,920 | 4.670 | 200 |
| 23 | " "/MDI | (18.4/43.1/38.5) | 18,000 | 4.240 | 160 |
| 24 | " Diol II/TDI | (36/30/34) | 114,000 | 4,630 | 76 |
| 25 | Polyol II/Diol III/TDI | (26/48/26) | 10,400 | 5,580 | 187 |
| 26 | Polyol I/Diol IV/ Diol I/ TDI | (28.9/32.6/5.2/33.3) | 129,000 | 5,950 | 136 |
| 27 | Polyol IV/Diol II/TDI | (40.2/31.9/27.9) | 51,000 | 4,650 | 160 |
| 28 | Polyol III/Diol II/TDI | (43.5/30.1/26.4) | 11,100 | 4,820 | 152 |

Clear Film Properties

The high tensile strengths and extensibility shown by these moisture cured urethanes suggest high impact resistance. Clear films (1.5-2 mils) coated on cold rolled steel exhibited falling dart impact in excess of 160 in-lb (Table V). Also modulus is qualitatively correlatable with film hardness. Polyol I/Diol I/Diol IV/TDI, with a modulus Diol I/Diol III/TDI, with a modulus of 14,000, has Sward Hardness value ~20.

The abrasion resistance was measured with 5 mil thick coatings on cold rolled steel using a Tabor Abrador (1 kg weight, CS-17 disc). All the moisture cured films show excellent abrasion resistance as measured by weight loss values summarized in Table V. For comparison, values for the two-component Polyol I/Desmodur N urethane and VMCA/DIDP are also included.

## TABLE V

### CLEAR MOISTURE CURED URETHANE FILM PROPERTIES

| Example | Prepolymer Composition | Tabor Abrasion mb/1000 | Sward Hardness | Dart Impact Front | Dart Impact Reverse |
|---|---|---|---|---|---|
| 33 | Polyol I/Diol III/TDI | 13.2 | 20 | 160+ | 160+ |
| 34 | " " /Silane I | 12.5 | 20 | 160+ | 160+ |
| 35 | " " /IPDI | 25.6 | 20 | 160+ | 160+ |
| 36 | " "IPDI/Silane I | 19.2 | 16 | 160+ | 160+ |
| 37 | " " /MDI | 5 | 18 | 160+ | 160+ |
| 38 | " " /MDI/ Silane I | 14 | 20 | 160+ | 160+ |
| 39 | Polyol IV/Diol II/TDI | 24 | 16 | 160+ | 160+ |
| 40 | Polyol IV/Diol II/TDI/ Silane I | 24 | 16 | 160+ | 160+ |
| 41 | Polyol I/Diol IV/Diol I/TDI | 15 | 62 | 160 | 160 |
| 42 | Polyol I/Diol IV/Diol I/TDI Silane I | 15 | 56 | 160 | 160 |
| Control C | Polyol I/Desmodur N | 26 | 48 | 160+ | 160+ |
| Control D | VMCA/DIDP* 80/20 | 62 | 66 | 60 | 15 |

* DIDP Di-isodecylphthalate

Adhesion

The use of silane coupling agents in composite preparation and in adhesive bonding is well known. Pretreatment of the substrate with a silane or inclusion of the silane in the resin formulation resulting in improved initial and wet resin substrate bond strength. Improvement in wet adhesion to metallic substrates should be of interest in surface coating area, since it has been suggested that if adhesion is maintained, corrosion will not occur.

Films were cast on various substrates and allowed to cure without catalyst at ambient conditions for 10-14 days. Adhesion was measured by cross-cut tape peel method (ASTM D-3359). Water soaked specimens were tested immediately after wiping off the surface water. Substrates tested included cold rolled steel, phosphate treated steel, aluminum and epoxy primed steel. Adhesion to epoxy primed cold rolled steel was tested because urethanes are often applied as top coats to epoxy primed surfaces in marine and aircraft finishes. The data summarized in Table VI show that end-capping of the prepolymer with silane at 2 phr (parts per hundred parts of resin) resulted in improved wet adhesion. Most significant improvements were observed for the urethane based on Polyol IV/Diol II/TDI. This system when modified with silane displayed excellent adhesion to all the substrates tested.

**TABLE VI**

**ADHESION* OF MOISTURE CURED URETHANES (CLEAR)**

| Example | Polymer Composition | Substrate | Initial | Water Immersion RT. 24 Hrs. | 75°C 3 Hrs. | 75°C 6 Hrs. | 75°C 9 Hrs. | 90°C 3 Hrs. |
|---|---|---|---|---|---|---|---|---|
| 43 | Polyol I/Diol III/TDI | Cold Roll Steel Q | 5 | 0 | | | | |
| | | Epoxy Primer | 5 | 5 | 3 | | | |
| | | Bonderite Steel | 5 | 2 | 0 | | | |
| | | Aluminum Q | 3 | 0 | | | | |
| 44 | " " TDI/ Silane I (2 phr) | Cold Roll Steel | 5 | 3 | 0 | | | |
| | | Epoxy Primer | 5 | 5 | 3 | 3 | 3 | 2 |
| | | Bonderite Steel | 5 | 5 | 4 | 5 | 5 | 5 |
| | | Aluminum | 5 | 0 | | | | |
| 45 | Polyol I/Diol III/IPDI | Cold Roll Steel | 5 | 0 | | | | |
| | | Epoxy Primer | 5 | 5 | 5 | 5 | 5 | 5 |
| | | Bonderite | 5 | 4 | 0 | | | |
| | | Aluminum | 5 | 0 | | | | |
| 46 | " "IPDI/ Silane I (2 phr) | Cold Roll Steel | 5 | 5 | 0 | | | |
| | | Epoxy Primer | 5 | 5 | 5 | 5 | 5 | 5 |
| | | Bonderite | 5 | 5 | 4 | 4 | 4 | 4 |
| | | Aluminum | 5 | 2 | 0 | | | |
| 47 | Polyol IV/Diol V/TDI | Cold Roll Steel | 5 | 5 | 0 | | | |
| | | Epoxy Primer | 5 | 5 | 5 | 5 | 5 | 5 |
| | | Bonderite | 5 | 5 | 5 | 5 | 5 | 5 |
| | | Aluminum | 5 | 0 | | | | |
| 48 | " " TDI/ TDI/Silane I | Cold Roll Steel | 5 | 5 | 5 | 5 | 5 | |
| | | Epoxy Primer | 5 | 5 | 5 | 5 | 5 | |
| | | Bonderite | 5 | 5 | 5 | 5 | 5 | |
| | | Aluminum | 5 | 3 | 4 | 4 | 4 | |

*The rating is from 0 to 5; a value of 5 indicates no delamination.

Pigmented Formulations

Pigmented formulations were prepared using a laboratory media mill. A masterbatch containing pigment and binder at 4/1 weight ratio and final total solids of 50% was ground to a Hegman Fineness $\geq$7.5. Coating compositions were then obtained by diluting the masterbatch with resin solutions to a final pigment/binder weight ratio of 0.84 (polyvinyl chloride ~17-20%) and total solids 50%.

Coatings of these pigmented compositions on cold rolled steel Q-panels showed excellent falling dart impact resistance, and possess Sward Hardness values of about 20. Polyol I/BDO/Polyol IV/TDI had impact resistance value of 160 and Sward Hardness 50-60 suggesting that harder impact resistant coating can be obtained from this Polyol I containing prepolymer (Table VII).

A typical pigment grind formulation is shown below.

| | | |
|---|---|---|
| 60% Polyol I/Diol III/ TONE 0210/TDI Solution | 74.2 g | wt. % |
| Prepolymer | 44.6 g | 9.91 |
| Solvent | 29.6 | 6.58 |
| Ti pure 960 $TiO_2$ | 178.4 | 39.65 |

**TABLE VII**

**PROPERTIES OF $TiO_2$ PIGMENTED MOISTURE CURE URETHANES**

| Example | Prepolymer Composition | Falling Dart Impact Front | Falling Dart Impact Reverse | Sward Hardness |
|---|---|---|---|---|
| 33 | Polyol I/Diol III/TDI | 160 | 160 | 14-20 |
| 34 | " " " /Silane I | 160 | 160 | 14-20 |
| 35 | " " /IPDI | 160 | 160 | 14-20 |
| 36 | " " " /Silane I | 160 | 160 | 14-20 |
| 37 | " " /MDI | 160 | 160 | 20-30 |
| 38 | " " " /Silane I | 160 | 160 | 20-30 |
| 39 | Polyol III/Diol II/TDI | 160 | 160 | 12 |
| 40 | " " " /Silane I | 160 | 160 | 8-12 |
| 41 | Polyol I/Diol I/Diol IV/TDI | 160 | 160 | 56 |
| 42 | " /Diol IV/TDI/Silane I | 160 | 160 | 50 |

Cleveland Humidity

Moisture resistance of pigmented formulations on cold rolled steel was evaluated by Cleveland Humidity exposure. Imron, Polyol I/Desmodur N, and VMCA/DIDP formulations were included for comparison. The results are summarized in Table VII.The silane modified compositions are clearly more moisture resistant as shown by their superior blister and corrosion resistance ratings. It is to be noted that coatings from Polyol IV /Diol II/TDI showed outstanding water resistance. After 1000 hours exposure, both the unmodified and the silane modified coatings showed slight blister formation. However, the silane modified coating displayed superior corrosion protection. The decreased tendency to blister on exposure to humid environment can be attributed to the improved adhesion of the silane modified compositions.

**TABLE VII**

**CLEVELAND HUMIDITY (120°F, 1000 HOURS EXPOSURE)**

| Example | Prepolymer Composition | Blister[a] | Corrosion[b] |
|---|---|---|---|
| 55 | Polyol I/Diol III/TDI | 6 MD | 9 |
| 56 | " " /Silane I | 8 D | 10 |
| 57 | " " /MDI | 4 MD | 10 |
| 58 | " " "/Silane I | 8 D | 10 |
| 59 | " " /IPDI | 6 D | 9 |
| 60 | " " " /Silane I | 8 D | 9 |
| 61 | Polyol IV/Diol II/TDI | 8 F | 8 |
| 62 | Polyol IV/Diol II/TDI/Silane I | 8 F | 10 |
| Control E | Polyol I/Desmodur N | 6 D | 10 |
| Control F | Imron | 6 D | -- |
| Control G | VMCA/DIDP | 6 D | 10 |

[a] Rating scale 0-10; 10 = no blister formation, F = few, M = medium, D = dense.

[b] Rating scale 0-10; a value of 10 indicates little or no corrosion.

Although the invention has been described in its preferred forms with a certain amount of particularity, it will be understood by those skilled in the art that the present disclosure has been made only by way of Example and that numerous changes can be made without departing from the spirit and scope of the invention.

CLAIMS:

1. A curable composition comprising isocyanate terminated reaction products of organic polyols, diols, and diisocyanates which have been end-capped with organo-functional silanes having the general formula:

$$Q-R'-\overset{\displaystyle R''_a}{\overset{|}{Si}}-(OR''')_{3-a}$$

wherein Q is a group selected from the group consisting of

$$-SH, -\overset{\displaystyle R}{\overset{|}{N}}-\overset{\displaystyle O}{\overset{\|}{C}}-NHR, \text{ and } -NHR$$

wherein R is a monovalent radical selected from the group consisting of hydrogen, alkyl, aryl, aralkyl, alkaryl, or

$$-R'-\overset{\displaystyle R''_a}{\overset{|}{Si}}-(OR''')_{3-a}$$

where R'' and R''' are lower alkyl groups containing from 1 to about 4-carbon atoms;

R' is an alkylene radical containing from 2 to about 18 carbon atoms;

a is an integer having values of 0, 1 or 2;

said polyols are organic polymers having an average hydroxyl functionality $\leq 6$; and

said diols are alkylene glycols or glycol ethers and lactone diols.

2. Composition claimed in claim 1 wherein, the organofunctionalsilane is an aminosilane having the general formula

$$R-NH-R'-\overset{\overset{R''_a}{|}}{Si}-(OR''')_{3-a}$$

wherein R, R', R'' and R''' are defined as in claim 1.

3. Composition claimed in claim 2 wherein the aminosilane is a N,N-bis(trialkoxysilylalkyl)amine, having 1 to about 4 carbons in the trialkoxy and alkyl moieties. e.g. N,N-bis(trimethoxysilylpropyl)amine, N,N-bis(triethoxysilylpropyl)amine or N,N-bis(tripropoxysilylpropyl)-amine.

4. Composition claimed in one or more of the claims 1-3 wherein the organic polyol is a terpolymer of vinyl chloride, vinyl acetate and an hydroxyalkyl acrylate or methacrylate having 2 to 4 carbons in the alkyl group or
a terpolymer of vinyl chloride, vinyl acetate and vinyl alcohol, said terpolymer being the partial hydrolysis product of a vinyl chloride-vinyl acetate copolymer.

5. The composition claimed in one or more of the claims 1-3 wherein the polyol is a composition prepared by the polymerization of a mixture of acrylic monomers one of which is an hydroxyl containing acrylic monomer.

6 . A composition claimed in claim 5 wherein the polyol is a terpolymer of methyl methacrylate, butyl acrylate and a hydroxyl containing acrylate selected from the group consisting of hydroxy-ethyl acrylate, hydroxypropylacrylate and a caprolactone oligomer prepared using hydroxyethyl acrylate as the initiator, said caprolactone oligomer having the structure:

$$CH_2{=}CH-\overset{O}{\overset{\|}{C}}-OCH_2CH_2\ [O-\overset{O}{\overset{\|}{C}}-(CH_2)_5]_n\ OH$$

wherein n is an integer having values of from 1 to about 10.

7. The composition claimed in one or more of the claims 1-3 wherein the polyol is a composition obtained by polymerization of a mixture of styrene, acrylic monomers and a hydroxyl containing acrylic monomer selected from hydroxyethyl acrylate, hydroxypropyl acrylate and a caprolactone oligomer prepared using hydroxyethyl acrylate as the initiator, said oligomer having the structure:

$$CH_2{=}CH-\overset{O}{\overset{\|}{C}}-OCH_2CH_2\ [O-\overset{O}{\overset{\|}{C}}-(CH_2)_5]_n\ OH$$

wherein n is an integer having values of from 1 to about 10.

8. The composition claimed in one or more of the claims 1-3 wherein the polyol is a reaction product of trimethylol propane and epsilon-caprolactone.

9. The composition claimed in one or more of the claims 1-8 wherein the diol is an epsilon-caprolactone polymer or a mixture of an alkylene diol and an epsilon-caprolactone polymer.

10. The composition claimed in claim 1 wherein the aminosilane is gamma-aminopropyltrimethoxysilane and bis(3-trimethoxysilylpropyl)amine.

European Patent Office

# EUROPEAN SEARCH REPORT

0158893
Application number

EP 85 10 3747

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | US-A-4 374 237 (M.H. BERGER et al.) * Claims 1,20; columns 7-8, example 1; column 13, lines 31-45 * --- | 1-3,10 | C 08 G 18/12<br>C 08 G 18/28<br>C 08 G 18/40<br>C 08 G 18/65<br>C 09 D 5/08 |
| X | US-A-4 067 844 (L.R. BARRON et al.) * Claims 1,18, column 3, lines 3-7, 50-56; column 4, example 1 * --- | 1,2,10 | |
| X | US-A-3 627 722 (G.M. SEITER) * Claims 1,2,5; column 1, line 73 - column 4, line 61; column 5, example 2; column 7, example 5 * ----- | 1,2 | |
| | | | TECHNICAL FIELDS SEARCHED (Int. Cl.4) |
| | | | C 08 G |

The present search report has been drawn up for all claims

| Place of search | Date of completion of the search | Examiner |
|---|---|---|
| THE HAGUE | 25-07-1985 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82